# EUROPÄISCHE PATENTSCHRIFT

(11) **EP 3 529 041 B1**
(45) Veröffentlichungstag und Bekanntmachung des Hinweises auf die Patenterteilung: **08.09.2021**
(21) Anmeldenummer: 17783846.3
(22) Anmeldetag: 12.10.2017
(51) Int. Cl.: B29C 49/48, B29C 49/78, B29C 49/04, B29L 31/00

(54) **EXTRUSIONSBLASFORM**
EXTRUSION BLOW MOLD
MOULE D'EXTRUSION-SOUFFLAGE

(30) Priorität: 18.10.2016 DE 102016119785
(43) Veröffentlichungstag der Anmeldung: 28.08.2019
(73) Patentinhaber: FHW-Moulds GmbH, 46242 Bottrop (DE)
(72) Erfinder: INGENBRAND, Jean, 45259 Essen (DE)
(74) Vertreter: Andrejewski - Honke Patent- und Rechtsanwälte Partnerschaft mbB
(86) Internationale Anmeldenummer: PCT/EP2017/076111
(87) Internationale Veröffentlichungsnummer: WO 2018/073100

(56) Entgegenhaltungen:
- EP-A2- 2 143 547
- DE-U1-202010 003 895
- US-A1- 2004 115 294
- US-A1- 2013 037 996

## Beschreibung

Die Erfindung betrifft eine Extrusionsblasform für die Herstellung von Hohlkörpern (aus thermoplastischem Kunststoff) durch Extrusionsblasformen, mit zumindest zwei Formkomponenten (z. B. Formhälften), die im geschlossenen Zustand einen Formraum definieren bzw. bilden, welcher durch eine Formraumwand begrenzt wird. Eine solche Blasform, die auch als Blasformwerkzeug bezeichnet wird, weist in der Regel mehrere Formkomponenten, insbesondere Formhälften bzw. Werkzeughälften auf. Ergänzend können weitere Formkomponenten, z. B. ein (separater) Formboden vorgesehen sein. Bevorzugt wird eine solche Blasform zur Herstellung von Hohlkörpern mit zumindest einer Öffnung und folglich zur Herstellung von Behältern, z. B. von Kanistern verwendet. Zur Erzeugung der Behälteröffnung bzw. Mündung kann das Mündungswerkzeug in die Formhälften integriert sein oder als separates Mündungswerkzeug zur Verfügung stehen.

Im Zuge der Blasformgebung erzeugt zunächst ein Extruder mit einem Blaskopf einen schlauchförmigen Vorformling, der dann in noch heißem Zustand von der Blasform umschlossen und durch Druckluft aufgeweitet wird, die mittels eines Blasdorns eingebracht wird, so dass der Hohlkörper die Innenkontur der Blasform erhält. Das Extrusionsblasformen, das z. B. für die Herstellung von Kanistern verwendet wird, ist gegenüber dem Streckblasen abzugrenzen, welches insbesondere der Herstellung von PET-Flaschen dient.

Um den Herstellungsprozess zu optimieren und zu beschleunigen, sind die Blasformen bzw. Werkzeuge mit einer Kühlung ausgerüstet. In der Praxis unterscheidet man unter anderem zwischen einer sogenannten Bohrkühlung und einer sogenannten Schalenkühlung. Bei der Bohrkühlung werden die Kühlkanäle durch Bohrungen in das Werkzeug bzw. die Formhälfte eingebracht. Bei einer Schalenkühlung werden die Kühlkanäle nicht durch Bohrungen eingebracht, sondern sie werden von Nuten gebildet, welche z. B. mittels Verschlussleisten oder Verschlussplatten verschlossen werden, wobei diese Verschlussleisten an die Kontur und folglich an die Formraumoberfläche bzw. Formraumwand angepasst sind, so dass insgesamt eine konturnahe Kühlung realisiert wird. Eine Blasform mit Schalenkühlung ist z. B. aus der DE 20 2010 003 895 U1 bekannt.

Aus der DE 20 2012 102 651 U1 kennt man eine Blasform mit einem Mündungswerkzeug, wobei in das Mündungswerkzeug ein Kühlkanal integriert ist.

Es besteht grundsätzlich das Bedürfnis, den Blasformprozess beim Extrusionsblasformen in geeigneter Weise zu überwachen. - Hier setzt die Erfindung ein.

Im Zusammenhang mit dem Streckblasen und insbesondere der Herstellung von PET-Flaschen ist es grundsätzlich bekannt, das Formwerkzeug mit einem Drucksensor auszurüsten, der bis in den Formraum hineinragt, so dass der Druck innerhalb des Formraumes messbar ist und insbesondere der "Endstatus" des Streckblasprozesses vor dem Öffnen der Form verifiziert werden kann. Dazu ist in der Regel ein Drucksensor ausreichend, der bis in den Formraum hineinragt (vgl. EP 2 629 957 B1).

Aus der EP 2 247 429 B1 ist im Zusammenhang mit dem Streckblasen außerdem der Einsatz von berührungssensitiven Sensoren bekannt, um die Anlage der Behälterblase an der Blasform zu detektieren. Des Weiteren sind Extrusionsblasformen in den Patentschriften US2004/115294A1 und EP2143547A2 beschrieben.

Der Erfindung liegt die Aufgabe zugrunde, eine Extrusionsblasform zu schaffen, die eine optimierte Herstellung von Hohlkörpern durch Extrusionsblasformen und insbesondere eine verbesserte Prozessüberwachung und damit eine höhere Qualität der hergestellten Hohlkörper ermöglicht.

Zur Lösung dieser Aufgabe lehrt die Erfindung bei einer gattungsgemäßen Extrusionsblasform der eingangs beschriebenen Art, dass in zumindest eine Formkomponente (z. B. Formhälfte) mehrere Temperatursensoren integriert sind, mit denen die Temperatur des Hohlkörpers in der Blasform in mehreren Bereichen der Formkomponenten messbar ist.

Die Erfindung geht dabei von der Erkenntnis aus, dass sich die Prozessführung erheblich optimieren lässt, wenn im Zuge der Blasformgebung Messwerte zur Verfügung gestellt werden, welche die Temperatur des Hohlkörpers innerhalb der Form vor dem Öffnen der Form und folglich vor der Entformung repräsentieren. Denn die richtige Entformungstemperatur ist für den Extrusionsprozess von besonderer Bedeutung. Die Zykluszeit wird in der Regel fest vorgegeben und so gewählt, dass die gewünschte Entformungstemperatur erreicht ist. Durch die erfindungsgemäße Integration von Temperatursensoren in die Formkomponenten besteht die Möglichkeit, die tatsächlich erreichte Temperatur des Hohlkörpers vor dem Entformen zu messen und damit zu überwachen, und zwar besonders bevorzugt an einer Vielzahl von Orten innerhalb der Blasform, so dass die Temperatur des Hohlköpers insbesondere in kritischen Bereichen ermittelt und überwacht werden kann. Wird z. B. eine bestimmte Zykluszeit für den Prozess vorgegeben und ist bei Erreichen dieser Zykluszeit eine bestimmte Solltemperatur in einem bestimmten Hohlkörperbereich vorgesehen, so lässt sich mit Hilfe der erfindungsgemäßen Temperatursensoren überwachen, ob die vorgesehene Temperatur zu dem entsprechenden Zeitpunkt auch tatsächlich erreicht ist oder ob die Temperatur gegebenenfalls (über ein Toleranzfenster hinaus) unterschritten oder überschritten wird. Die Anzeige der Temperatur bzw. der verschiedenen Temperaturen kann dabei manuell durch einen Operateur überwacht werden, so dass bei entsprechenden Abweichungen in den Prozess eingegriffen werden kann. Werden z. B. trotz vorgegebener Zykluszeit nicht die vorgesehenen Temperaturen erreicht oder diese überschritten, so kann dieses auf ein Problem im Herstellungsprozess hinweisen, so dass schließlich in den Prozess eingegriffen werden kann. Mit einer solchen (manuellen) Unterbrechung des Prozesses, welche durch die erfindungsgemäß vorgesehenen Sensoren ermöglicht wird, lässt sich der Ausschuss reduzieren und damit die Wirtschaftlichkeit der Herstellung optimieren, denn es kann rechtzeitig auf Störungen im Prozess reagiert werden.

Optional oder ergänzend besteht die Möglichkeit, dass Überschreiten oder Unterschreiten der gewünschten Temperatur durch ein akustisches Signal und/oder ein optisches Signal (d. h. ein Warnsignal) anzuzeigen bzw. zu signalisieren. Darauf wird im Folgenden noch eingegangen.

Zweck der in die Formkomponente integrierten Temperatursensoren ist die Bestimmung der Temperatur des Hohlköpers (aus thermoplastischem Kunststoff) der innerhalb des Formraums hergestellt wird und sich von innen an die Formraumwand anlegt. Die Messung kann dabei direkt oder indirekt erfolgen.

Für eine direkte Messung werden die Temperatursensoren (mit ihrer Messspitze) bündig in die Formraumwand integriert. Dieses lässt sich z. B. bei Temperatursensoren realisieren, die als Thermoelemente ausgebildet sind. Im Zuge der Herstellung der Form werden in die Formraumwand Durchbrechungen eingebracht und in diese Durchbrechungen werden die Temperatursensoren eingesetzt und bündig in die Formraumwand integriert, so dass die Temperatursensoren selbst bzw. deren Messspitzen bereichsweise den Formraum begrenzen bzw. die (innere) Oberfläche der Formraumwand bilden. Der Hohlkörper legt sich im Zuge der Herstellung folglich gegen die Formraumwand und damit bereichsweise unmittelbar gegen die Temperatursensoren bzw. deren Messspitzen an.

In einer alternativen Ausgestaltung werden die Temperatursensoren nicht vollständig durch die Formraumwand bis in bzw. an den Formraum hindurchgeführt, sondern derart in die Formraumwand integriert, dass sie sich rückseitig bis an die Formraumwand erstrecken, so dass die Temperatur des Hohlkörpers nicht direkt bzw. unmittelbar, sondern indirekt über die Temperatur der in diesem Bereich verbleibenden Formraumwand gemessen wird. Die Sensoren können folglich von der Rückseite in eine Ausnehmung der Formkomponente eingebracht werden, so dass im Bereich der Temperatursensoren die Formraumwand mit einer gewissen Reststärke bzw. Restwanddicke verbleibt, die z. B. weniger als 5 mm, vorzugsweise bis zu 3 mm betragen kann. Die Temperatursensoren werden folglich bis auf einen Abstand von weniger als 5 mm, vorzugsweise bis zu 3 mm an den Formraum herangeführt. Die Formraumwand selbst ist in grundsätzlich bekannter Weise aus Metall gefertigt, so dass die Im Bereich der Sensoren gegebenenfalls Formraumwand eine hohe Wärmeleitfähigkeit aufweist. Die Temperatur der Formraumwand repräsentiert dabei folglich verhältnismäßig gut die Temperatur des sich an die Formraumwand anlegenden Hohlkörpers aus thermoplastischem Kunststoff. Eine solche Ausgestaltung mit rückseitigen Ausnehmungen für die Temperatursensoren bietet sich z. B. beim Einsatz von Thermoelementen aber insbesondere auch Infrarotsensoren als Temperatursensoren an.

Es liegt im Übrigen im Rahmen der Erfindung, dass die Temperatursensoren in Ausnehmungen der Formraumwand integriert sind, die (zum Formraum hin) verschlossen sind, und zwar metallisch verschlossen sind. Im Zuge der Herstellung lassen sich folglich zunächst vollständige Durchbrechungen in die Formraumwand einbringen, die jedoch anschließend wieder verschlossen werden, so dass die Temperatursensoren nicht selbst bündig in die Formraumwand integriert sind, sondern in der beschriebenen Weise rückseitig hinter der Formraumwand angeordnet sind. In einem solchen Fall können die Ausnehmungen der Formraumwand mit einem gut wärmeleitenden metallischen Werkstoff verschlossen sein, z. B. aus Kupfer oder einer Kupferlegierung.

Die Formkomponenten der Extrusionsblasform sind in grundsätzlich bekannter Weise gekühlt ausgebildet, d. h. in die Formkomponenten sind Kühlkanäle integriert. Dabei ist es zweckmäßig, die Temperatursensoren und/oder deren Anschlussleitungen jeweils in die Bereiche (z. B. Stege) zwischen zwei benachbarten Kühlkanälen zu integrieren.

Die Erfindung umfasst dabei z. B. Formkomponenten mit Bohrkühlung, bei denen die Kühlkanäle durch Bohrungen integriert sind. Bevorzugt werden jedoch Formkomponenten verwendet, die mit einer Schalenkühlung ausgerüstet sind. Dabei weisen die Formkomponenten ein oder mehrere Kühlkammern auf, welche von einem rückseitig der Formraumwand verlaufenden Kühlkanal gebildet werden, wobei der Kühlkanal von mehreren Kanalabschnitten gebildet wird, die über Umlenkungen miteinander verbunden sind. In der dem Formraum abgewandten Rückseite der Werkzeugkomponente bzw. Formkomponente sind mehrere durch Stege getrennte Nuten angeordnet, welche unter Bildung des Kühlkanals mit mehreren Verschlussleisten verschlossen sind, die mit vorgegebener Tiefe bzw. Eindringtiefe in die Nuten eingreifen. Die Verschlussleisten sind dabei an die Kontur und folglich an die Formraumwand angepasst, so dass insgesamt eine konturnahe Kühlung realisiert wird. Dabei besteht die Möglichkeit, dass mehrere Verschlussleisten zu einer einstückig gefertigten Verschlussplatte zusammengefasst sind, welche unter Bildung des Kühlkanals rückseitig auf die Werkzeugkomponente aufgesetzt ist. Eine solche Ausführungsform ist z. B. in der DE 20 2010 003 895 U1 beschrieben und die erfindungsgemäße Ausgestaltung mit Temperatursensoren kann bevorzugt bei solchen Formkomponenten realisiert werden. Die Temperatursensoren und/oder deren Anschlussleitungen werden dabei bevorzugt in den Bereich der Stege zwischen den einzelnen Kühlkanalabschnitten integriert. Über die Stege besteht die Möglichkeit, die Anschlussleitungen der Temperatursensoren, die selbst sehr klein ausgebildet sein können, aus der Formkomponente herauszuführen.

Gegenstand der Erfindung ist auch eine Vorrichtung zum Herstellen von Hohlkörpern (aus thermoplastischem Kunststoff) durch Extrusionsblasformen mit einer Extrusionsblasform der beschriebenen Art und mit einer Steuereinrichtung zur Steuerung des Blasformprozesses. Mit einer solchen Steuereinrichtung werden in grundsätzlich bekannter Weise die verschiedenen Parameter des Prozesses gesteuert, z. B. die Zykluszeit. Die beschriebenen Temperatursensoren können mit dieser Steuereinrichtung verbunden sein, so dass der Blasformprozess in bevorzugter Weiterbildung in Abhängigkeit von den ermittelten Temperaturwerten steuerbar ist.

Dabei liegt es im Rahmen der Erfindung, dass auf der Grundlage der ermittelten Temperaturwerte lediglich eine Überwachung des Prozesses erfolgt, indem z. B. die Zykluszeit (bis zum Entformen) für ein bestimmtes Produkt vorgegeben wird. Im Zuge der Überwachung wird dann lediglich festgestellt, ob die Temperatur des Hohlkörpers und folglich die Entformungstemperatur einen gewünschten Wert bzw. Sollwert aufweist bzw. innerhalb eines vorgegebenen Temperaturfensters liegt. Bei einer solchen Ausführungsform besteht die Möglichkeit, das Messergebnis optisch und/oder akustisch anzuzeigen. So können unterschiedliche Anzeigen/Signale für einen Wert innerhalb des Temperaturfensters und einen Wert außerhalb des Temperaturfensters vorgesehen sein. Es liegt jedoch auch im Rahmen der Erfindung, dass lediglich bei einem Wert außerhalb des Temperaturfensters ein optisches und/oder akustisches Warnsignal erzeugt wird. In einem solchen Fall kann der Prozess unterbrochen werden, um festzustellen, aus welchen Gründen Temperaturüberschreitungen oder Unterschreitungen erfolgt sind. Damit lässt sich vor allem vermeiden, dass mehrfach Behälter mit zu niedrigen oder zu hohen Entformungstemperaturen hergestellt werden, so dass insgesamt der Ausschuss reduziert und damit die Wirtschaftlichkeit des Verfahrens erhöht werden kann, ohne dass die ermittelten Temperaturwerte zwingend automatisiert in den Herstellungsprozess einbezogen werden müssen.

Es liegt jedoch alternativ ebenfalls im Rahmen der Erfindung, den Blasformprozess tatsächlich in Abhängigkeit von einem oder mehreren ermittelten Temperaturwerten (automatisiert) zu steuern oder gegebenenfalls auch zu regeln. So besteht grundsätzlich die Möglichkeit, die Zykluszeit nicht fest vorzugeben, sondern in Abhängigkeit von den ermittelten Temperaturwerten bzw. von einem ermittelten Temperaturwert variabel anzupassen. In dieser Variante wird die Zykluszeit folglich nicht auf einen festen Wert vorgegeben und die Temperatur lediglich zum Zwecke der Kontrolle ermittelt, sondern die Zykluszeit wird in Abhängigkeit von der Temperatur variiert, so dass bei variablen Zykluszeiten stets bei derselben (vorgegebenen) Entformungstemperatur entformt wird. Dabei liegt es im Rahmen der Erfindung, lediglich einen Messwert eines Temperatursensors oder auch mehrere Messwerte mehrerer Temperatursensoren in den Prozess einzubeziehen.

Gegenstand der Erfindung ist auch ein Verfahren zum Herstellen eines Hohlkörpers aus thermoplastischem Kunststoff durch Extrusionsblasformen mit einer Extrusionsblasform der beschriebenen Art bzw. mit einer Vorrichtung der beschriebenen Art. Das Verfahren ist dadurch gekennzeichnet, dass die Temperatur des Hohlkörpers (aus thermoplastischem Kunststoff) direkt oder indirekt in mehreren Bereichen der Formkomponente gemessen wird. Die Messwerte können in der beschriebenen Weise in den Herstellungsprozess einbezogen werden.

Die Temperaturmessung erfolgt während der Zykluszeit kontinuierlich oder periodisch in zeitlichen Abständen von z. B. einer oder mehreren Sekunden.

Die Blasform kann aus mehreren Formkomponenten, z. B. aus zwei Formhälften bestehen. Bevorzugt dient die Blasform der Herstellung von Behältern mit einer Behälteröffnung, z. B. Kanistern. Der Mündungsbereich kann dabei in die beiden Formhälften integriert sein. Die Erfindung umfasst aber auch Ausführungsformen, bei denen als Formkomponenten zusätzliche Mündungswerkzeuge vorgesehen sind. Erfindungsgemäß können auch in den Bereich dieser Mündungswerkzeuge ein oder mehrere Temperatursensoren integriert sein, zumal die Temperatur im Bereich der Mündung für den Herstellungsprozess besonders kritisch ist.

Von besonderer Bedeutung ist im Rahmen der Erfindung die Überwachung der Entformungstemperatur über die beschriebenen Temperatursensoren. Die Messwerte können ergänzend zu weiteren Zwecken zur Verfügung gestellt werden. So lässt sich z. B. über die Aufzeichnung der Temperatur die Herstellung insgesamt überwachen, z. B. die Anzahl der hergestellten Artikel. Auch die Zykluszeit lässt sich über die ermittelte Temperatur aufzeichnen und insbesondere lässt sich im Sinne einer Qualitätskontrolle der Temperaturverlauf über lange Zeiträume aufzeichnen, um z. B. festzustellen, ob der Prozess gleichbleibend verläuft.

Die ermittelten Werte und Informationen lassen sich unmittelbar im Bereich der Blasformvorrichtung bzw. an deren Steuereinrichtung anzeigen. Unter Berücksichtigung moderner Kommunikationsmittel besteht jedoch außerdem die Möglichkeit, die ermittelten Messwerte durch Fernübertragung anderen Komponenten und Nutzern zur Verfügung zu stellen. So besteht insbesondere die Möglichkeit einer drahtlosen Fernübertragung über vorhandene Rechnernetze, drahtlose Netzwerke (Wlan) oder auch über das Internet. Insbesondere besteht im Rahmen der Erfindung die Möglichkeit, die ermittelten Messwerte über eine Website und/oder über eine App zur Verfügung zu stellen, so dass über eine Fernabfrage nicht nur Maschinendaten, sondern letztlich auch Artikeldaten abgefragt werden können. Die Erfindung lässt sich folglich auch in moderne Produktionsprozesse unter dem Aspekt "Industrie 4.0" integrieren.

Im Folgenden wird die Erfindung anhand einer lediglich ein Ausführungsbeispiel darstellenden Zeichnung näher erläutert. Es zeigen:
- **Fig. 1**: eine Extrusionsblasform in einem vereinfachten Querschnitt und
- **Fig. 2**: eine Formhälfte der Blasform nach Fig. 1 in einer Ansicht von innen auf die Formraumwand,
- **Fig. 3**: einen vergrößerten Ausschnitt aus Fig. 1,
- **Fig. 4**: eine abgewandelte Ausführungsform des Gegenstandes nach Fig. 3,
- **Fig. 5**: eine weitere Ausführungsform des Gegenstandes nach Fig. 3 und
- **Fig. 6**: eine weitere Ausführungsform des Gegenstandes nach Fig. 3.

Die Figuren zeigen eine Extrusionsblasform 1 für die Herstellung von Hohlkörpern 2 durch Extrusionsblasformen. Mit diesem Verfahren werden Hohlkörper, z. B. Kanister, aus thermoplastischem Kunststoff hergestellt. Die Blasform 1 besteht aus zumindest zwei Formkomponenten 3, die im Ausführungsbeispiel als Formhälften 3 dargestellt sind. Im geschlossenen Zustand definieren diese Formhälften 3 einen Formraum 4, der durch eine Formraumwand 5 begrenzt wird. In die Formkomponenten 3 sind Kühlkanäle 6 integriert, die im Ausführungsbeispiel von einer Schalenkühlung gebildet werden. Dazu weisen die Formhälften 3 jeweils ein oder mehrere Kühlkammern auf, welche die Kühlkanäle 6 bilden. Die Kühlkanäle 6 werden dabei von mehreren Kanalabschnitten gebildet, die über Umlenkungen miteinander verbunden sind. In der dem Formraum abgewandten Rückseite der Formhälften sind mehrere durch Stege 7 getrennte Nuten angeordnet, welche unter Bildung der Kühlkanäle 6 mit Verschlussleisten 8 verschlossen sind. Dabei sind jeweils mehrere Verschlussleisten 8 zu einer einstückig gefertigten Verschlussplatte zusammengefasst, welche unter Bildung der Kühlkanäle 6 rückseitig auf die Formhälfte aufgesetzt ist. Eine solche Schalenkühlung ist z. B. aus der DE 20 2010 003 895 U1 bekannt. Die Erfindung umfasst aber auch Blasformen mit sogenannten Bohrkühlungen. Eine solche Ausführungsform ist nicht dargestellt.

Erfindungsgemäß sind in die Formhälften 3 jeweils mehrere Temperatursensoren 9 integriert. Mit diesen Temperatursensoren 9 ist die Temperatur des Hohlkörpers 2 in der Blasform 1 in mehreren Bereichen der Blasform messbar.

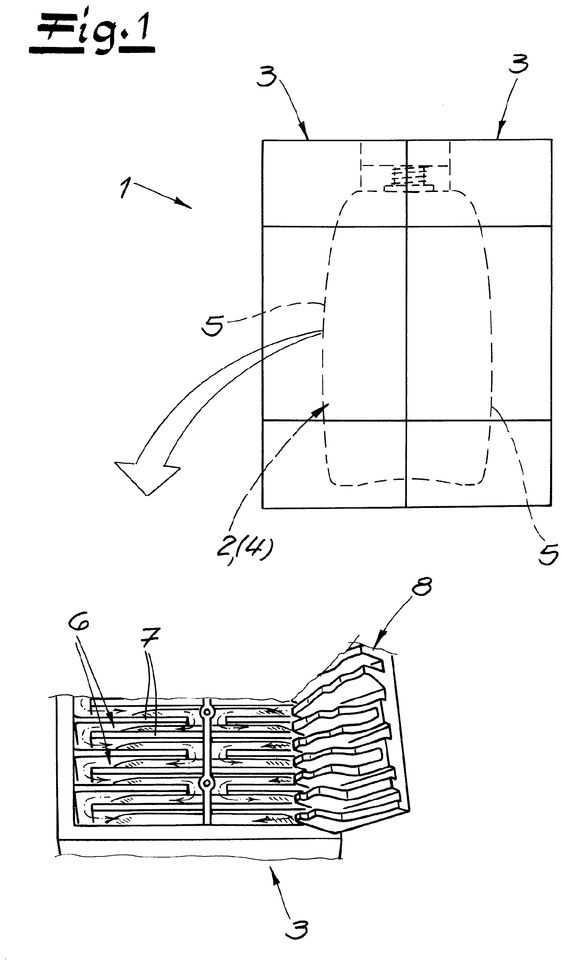

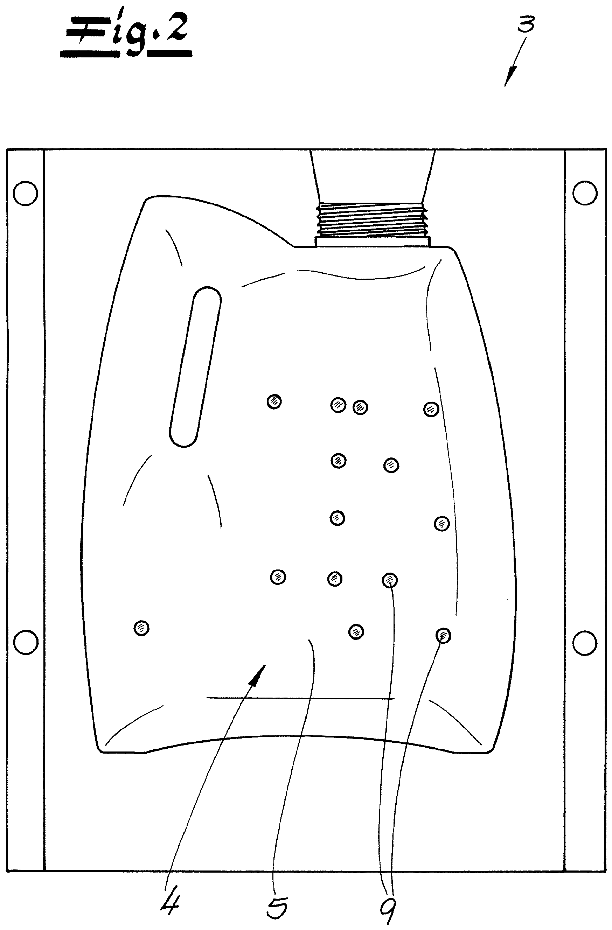

In dem Ausführungsbeispiel nach den Fig. 1 bis 3 sind diese Temperatursensoren 9 (die z. B. als Thermoelemente ausgebildet sind) bündig in die Formraumwand 5 integriert, d. h. die Temperatursensoren 9 bzw. deren Messspitzen bilden bereichsweise die Innenfläche der Formraumwand, so dass die Temperatursensoren 9 mit ihren Messspitzen unmittelbar an den Formraum 4 angrenzen. Im Zuge der Herstellung liegt der Hohlkörper 2 aus thermoplastischem Kunststoff folglich unmittelbar an den Messspitzen der Temperatursensoren 9 an, so dass die Temperatur des Hohlkörpers 2 mit Hilfe der Temperatursensoren 9 unmittelbar gemessen wird. Dazu wird im Zuge der Herstellung der Formhälften 3 eine Ausnehmung in die Formraumwand 5 eingebracht und in diese Ausnehmungen werden dann die Temperatursensoren 9 eingepasst und an die Oberfläche der Formraumwand angearbeitet.

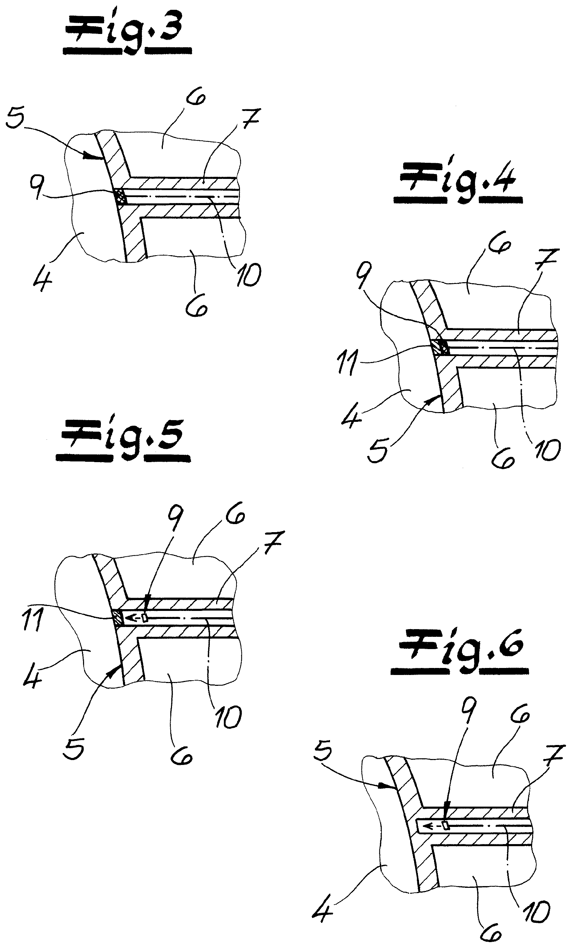

Alternativ besteht gemäß Fig. 4 die Möglichkeit, die Temperatursensoren 9 (Z. B. Thermoelemente) nicht unmittelbar bis an den Formraum 4 heranzuführen, sondern eine Ausnehmung in der Formraumwand mit einem gut wärmeleitenden Material, insbesondere einem metallischen Werkstoff 11, z. B. mit Kupfer oder einer Kupferlegierung zu verschließen, so dass die Innenfläche der Formraumwand in diesem Bereich von dem (zusätzlichen) metallischen Werkstoff gebildet wird. Die Temperatursensoren (z. B. Thermoelemente) berühren dann diesen metallischen Werkstoff 11 rückseitig, so dass die Temperatur dieses metallischen Werkstoffes ermittelt wird. Damit erfolgt gleichsam eine indirekte Messung der Temperatur des Hohlkörpers 2. Auch bei dieser Ausführungsform können als Temperatursensoren Thermoelemente zum Einsatz kommen.

Eine abgewandelte Ausführungsform der Erfindung ist in Fig. 5 dargestellt. Die Temperatursensoren 9 sind in diesem Fall als IR-Sensoren ausgebildet. Auch in diesem Fall kann eine entsprechende Ausnehmung in der Formraumwand mit einem metallischen Werkstoff 11, z. B. aus Kupfer oder einer Kupferlegierung, verschlossen sein, so dass die Temperatur dieses metallischen Werkstoffes mit Hilfe des IR-Sensors als Strahlungssensor ermittelt wird. Solche IR-Sensoren haben den Vorteil, dass sie die Temperatur stark gerichtet messen können, so dass insbesondere Einflüsse der Kühlung minimiert werden können.

Alternativ besteht die Möglichkeit, dass die Ausnehmungen für die Sensoren 9 nicht durchgehend bis in den Formraum eingebracht und mit einem metallischen Werkstoff verschlossen werden, sondern die Ausnehmungen können auch als gleichsam "Sacklöcher" von der Rückseite eingebracht sein. Diese Ausführungsform ist in Fig. 6 für einen Temperatursensor als IR-Sensor dargestellt. Auch bei einer solchen Ausführungsform können jedoch alternativ Thermoelemente eingesetzt werden.

Die Sensoren 9 sind in allen Ausführungsbeispielen in den Bereichen bzw. Stegen 7 zwischen den Kühlkanälen angeordnet und auch die Anschlussleitungen 10 der Sensoren können in diesen Bereichen angeordnet sein. Dieses ist lediglich angedeutet.

Mit Hilfe der beschriebenen Temperatursensoren kann in verschiedenster Weise eine Überwachung und/oder Steuerung des Blasformprozesses realisiert werden. Einzelheiten sind in den Figuren nicht dargestellt.

## Patentansprüche

1. Extrusionsblasform (1) für die Herstellung von Hohlkörpern (2) durch Extrusionsblasformen,
mit zumindest zwei Formkomponenten (3), z. B. Formhälften, die im geschlossenen Zustand einen durch eine Formraumwand (5) begrenzten Formraum (4) definieren,
**dadurch gekennzeichnet, dass** in zumindest eine Formkomponente (3) mehrere Temperatursensoren (9) integriert sind, mit denen die Temperatur des Hohlkörpers (2) in der Blasform (1) in mehreren Bereichen der Formkomponenten (3) messbar ist,
wobei die Temperatursensoren (9) bündig in die Formraumwand (5) integriert sind, indem sie in Durchbrechungen in der Formraumwand eingesetzt und bündig in die Formraumwand integriert sind, so dass die Temperatursensoren (9) selbst bereichsweise den Formraum (4) begrenzen und die Oberfläche der Formraumwand (5) bilden.

2. Extrusionsblasform (1) nach Anspruch 1, wobei in die Formkomponente (3) Kühlkanäle (6) integriert sind, **dadurch gekennzeichnet, dass** die Temperatursensoren (9) und/oder deren Anschlussleitungen (10) jeweils in die Bereiche zwischen zwei benachbarten Kühlkanälen (6) integriert sind.

3. Extrusionsblasform (1) nach Anspruch 1 oder 2, **dadurch gekennzeichnet, dass** die Temperatursensoren (9) als Thermoelemente ausgebildet sind.

4. Extrusionsblasform (1) nach einem der Ansprüche 1 bis 3, **dadurch gekennzeichnet, dass** die Temperatursensoren (9) als Infrarotsensoren ausgebildet sind.

5. Vorrichtung zum Herstellen von Hohlkörpern aus thermoplastischem Kunststoff durch Extrusionsblasformen, mit einer Extrusionsblasform (1) nach einem der Ansprüche 1 bis 4 und mit einer Steuereinrichtung zur Steuerung des Blasformprozesses.

6. Vorrichtung nach Anspruch 5, **dadurch gekennzeichnet, dass** die Temperatursensoren (9) mit der Steuereinrichtung verbunden sind und dass der Blasformprozess in Abhängigkeit von den ermittelten Temperaturwerten kontrollierbar und/oder steuerbar ist.

7. Verfahren zum Herstellen eines Hohlkörpers aus thermoplastischem Kunststoff durch Extrusionsblasformen mit einer Vorrichtung nach Anspruch 5 oder 6, **dadurch gekennzeichnet, dass** die Temperatur des Hohlkörpers in mehreren Bereichen zumindest einer Formkomponente gemessen wird.

## Claims

1. Extrusion blow mould (1) for the manufacture of hollow objects (2) by extrusion blow moulding,
with at least two mould components (3), e.g. mould halves, which define a mould chamber (4) delimited by a mould chamber wall (5) in the closed state,
**characterized in that** a plurality of temperature sensors (9) with which the temperature of the hollow object (2) in the blow mould (1) can be measured in a plurality of areas of the mould components (3) are integrated into at least one mould component (3),
wherein the temperature sensors (9) are integrated into the mould cavity wall (5) in a flush manner by being inserted into holes in the mould cavity wall and integrated into the mould cavity wall in a flush manner so that the temperature sensors (9) also delimit the mould chamber (4) and constitute the surface of the mould cavity wall (5) in areas.

2. The extrusion blow mould (1) according to claim 1, wherein cooling channels (6) are integrated into the mould component (3), **characterized in that** the temperature sensors (9) and/or their connection lines (10) are respectively integrated into the areas between two adjacent cooling channels (6).

3. The extrusion blow mould (1) according to claim 1 or 2, **characterized in that** the temperature sensors (9) are configured as thermocouples (10, 11).

4. The extrusion blow mould (1) according to one of claims ) 1 to 3, **characterized in that** the temperature sensors (9) are configured as infrared sensors.

5. Apparatus for manufacturing hollow objects from thermoplastic synthetic material by extrusion blow moulding, with an extrusion blow mould (1) according to one of claims 1 to 4 and with a control device for controlling the blow moulding process.

6. The apparatus according to claim 5, **characterized in that** the temperature sensors (9) are connected to the control device and **in that** the blow moulding process can be monitored and/or controlled as a function of the determined temperature values.

7. A method for manufacturing a hollow object from thermoplastic synthetic material by extrusion blow moulding with an apparatus according to claim 5 or 6, **characterized in that** the temperature of the hollow object is measured in a plurality of areas of at least one mould component.

## Revendications

1. Moule d'extrusion-soufflage (1), destiné à fabriquer des corps creux (2) par moulage par extrusion-soufflage,
doté d'au moins deux composants de moule (3), par exemple des moitiés de moule, qui lorsqu'elles sont fermées définissent un espace de moulage (4) délimité par une paroi d'espace de moulage (5),
**caractérisé en ce que** dans au moins un composant de moule (3) sont intégrés plusieurs capteurs de température (9), à l'aide desquels la température des corps creux (2) est susceptible d'être mesurée dans le moule de soufflage (1) dans plusieurs zones des composants de moule (3),
les capteurs de température (9) étant intégrés à fleur dans la paroi d'espace de moulage (5) en étant insérés dans des percées ménagées dans la paroi d'espace de moulage et intégrés à fleur dans la paroi d'espace de moulage, de sorte que les capteurs de température (9) délimitent eux-mêmes l'espace de moulage (4) à certains endroits et forment la surface de la paroi d'espace de moulage (5).

2. Moule d'extrusion-soufflage (1) selon la revendication 1, dans le composant de moule (3) étant intégrés des canaux de refroidissement (6), **caractérisé en ce que** les capteurs de température (9) et/ou leurs lignes de connexion (10) sont respectivement intégré(e)s dans les zones entre deux canaux de refroidissement (6) voisins.

3. Moule d'extrusion-soufflage (1) selon la revendication 1 ou 2, **caractérisé en ce que** les capteurs de température (9) sont conçus sous la forme de thermocouples.

4. Moule d'extrusion-soufflage (1) selon l'une quelconque des revendications 1 à 3, **caractérisé en ce que** les capteurs de température (9) sont conçus sous la forme de capteurs à infrarouge.

5. Dispositif, destiné à fabriquer des corps creux en une matière thermoplastique par moulage par extrusion-soufflage, doté d'un moule d'extrusion-soufflage (1) selon l'une quelconque des revendications 1 à 4 et doté d'un système de commande, destiné à commander le processus d'extrusion-soufflage.

6. Dispositif selon la revendication 5, **caractérisé en ce que** les capteurs de température (9) sont connectés avec le système de commande et **en ce que** le processus de moulage par extrusion-soufflage est susceptible d'être contrôlé ou commandé en fonction des valeurs de température déterminées.

7. Procédé, destiné à fabriquer un corps creux en une matière thermoplastique par moulage par extrusion-soufflage, à l'aide d'un dispositif selon la revendication 5 ou 6, **caractérisé en ce que** l'on mesure la température du corps creux à plusieurs endroits d'au moins un composant de moule.
